(19) Europäisches Patentamt
European Patent Office
Office européen des brevets

(11) **EP 2 198 280 B1**

(12) **EUROPEAN PATENT SPECIFICATION**

(45) Date of publication and mention
of the grant of the patent:
**05.12.2018 Bulletin 2018/49**

(51) Int Cl.:
***G01N 23/2258*** (2018.01)

(21) Application number: **08805189.1**

(22) Date of filing: **09.10.2008**

(86) International application number:
**PCT/EP2008/063549**

(87) International publication number:
**WO 2009/047299 (16.04.2009 Gazette 2009/16)**

(54) **ION BEAM SPUTTERING APPARATUS COMPRISING A ROTARY SAMPLE COLLECTOR**

IONENSTRAHL-SPUTTEREINRICHTUNG ENTHALTEND EINEN ROTIERENDEN PROBEN-KOLLEKTOR

ÉQUIPEMENT DE PULVÉRISATION À FAISCEAU IONIQUE COMPRENANT UN COLLECTEUR D'ÉCHANTILLON ROTATIF

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.10.2007 US 979171 P**

(43) Date of publication of application:
**23.06.2010 Bulletin 2010/25**

(73) Proprietor: **Centre de Recherche Public - Gabriel Lippmann**
**4422 Belvaux (LU)**

(72) Inventors:
• **MIGEON, Henri-Noël**
**L-7481 Tuntange (LU)**
• **WIRTZ, Tom**
**L-6796 Grevenmacher (LU)**
• **SLODZIAN, Georges**
**F-92330 Sceaux (FR)**

(74) Representative: **Pronovem**
**Pronovem Luxembourg**
**12, avenue du Rock n' Roll**
**BP 327**
**4004 Esch sur Alzette (LU)**

(56) References cited:
• WITTMAACK K: "Experimental and theoretical investigations into the origin of cross-contamination effects observed in a quadrupole-based SIMS instrument" APPLIED PHYSICS A (SOLIDS AND SURFACES) WEST GERMANY, vol. A38, no. 4, December 1985 (1985-12), pages 235-252, XP002509038 ISSN: 0721-7250
• MEISENHEIMER R G: "SOME 14 MeV NEUTRON SPUTTERING CHARACTERISTICS OF A POLYCRYSTALLINE Nb SAMPLE." JOURNAL OF NUCLEAR MATERIALS 1976 DEC, vol. 63, 16 February 1976 (1976-02-16), pages 429-431, XP002509039
• KUIRI ET AL: "Observation of ZnS nanoparticles sputtered from ZnS films under 2MeV Au irradiation" NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 248, no. 1, 1 July 2006 (2006-07-01), pages 25-30, XP005494701 ISSN: 0168-583X
• AGER F J ET AL: "Analysis of the elements sputtered during the lanthanum implantation in stainless steels" NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 139, no. 1-4, 1 April 1998 (1998-04-01), pages 344-349, XP004148747 ISSN: 0168-583X

- **WIRTZ T ET AL: "Storing Matter: A new quantitative and sensitive analytical technique", APPLIED SURFACE SCIENCE, ELSEVIER, AMSTERDAM, NL, vol. 255, no. 4, 13 May 2008 (2008-05-13), pages 1498-1500, XP025690721, ISSN: 0169-4332, DOI: 10.1016/J.APSUSC.2008.05.109 [retrieved on 2008-05-13]**

## Description

### Field of the invention

The present invention relates to a method for quantitative investigations of organic and inorganic samples and relates also to an analytical instrument for carrying out said quantitative investigations.

### Prior art and related technical background

Among surface analysis techniques, Secondary Ion Mass Spectrometry (SIMS) is a well-established and widely used technique.

The SIMS technique is based on the detection of secondary ions emitted by a sample exposed to a primary ion bombardment produced by a focused beam of ions, typically $Cs^+$, $Ga^+$, $Ar^+$, $O^-$ or $O_2^+$. The ion emission produced by the sample following the primary ion bombardment, also called sputtering phenomenon, which is a characteristic of the material itself, is then analysed by mass spectrometry.

Owing in particular to its excellent sensitivity, its high dynamic range and its good depth resolution, SIMS is an extremely powerful technique for analyzing samples. However, SIMS has an important drawback due to the fact that this technique uses the ionized part of the emitted flux from the sample. This drawback is known as the "matrix effect" which is a quantification problem due to the fact that the ionisation probability of atoms and molecules emitted from the sample strongly depends on the sample composition. For metallic samples or for semi-conductors for instance, the ionization probability for positive and negative ions is exponentially depending on the electron work function of the sample ("electron tunnelling model"). As a consequence, the intensity of the measured signals is also greatly depending on the composition of the analysed sample.

A prior art document from Wittmaack, K., "Experimental and theoretical investigations into the origin of cross-contamination effects observed in a quadrupole-based SIMS instrument", Applied Physics A, vol. A38, no. 4, pages 235-252, XP002509038) shows a secondary ion mass spectroscope (SIMS) comprising an ion bombardment source and a rotary sample manipulator on which reflector samples and collector samples may be positioned.

### Aims of the invention

The present invention aims to provide an analytical method and instrument which do not have the drawbacks of the prior art.

Particularly, the invention aims to provide an analytical method and instrument which are sensitive and which allow quantification.

### Summary of the invention

The present invention relates to a method for analysing an inorganic or organic sample under ultra-high vacuum, as defined in claim 1.

Particular embodiments of the method are defined in claims 2 to 7.

The present invention relates also to an analytical instrument operating under ultra-high vacuum as defined in appended claim 8.

Particular embodiments of the instrument are defined in claims 9 to 13.

### Short description of the drawings

Figure 1 is a schematic representation of a classic SIMS analysis.

Figure 2 is a schematic representation of the deposition of sample particles on a collector according to the present invention.

Figure 3 is a schematic representation of the analysis of the sample particles deposited onto the collector according to the present invention.

Figure 4 is a schematic representation of a first preferred embodiment according to the present invention.

Figure 5 is a schematic representation of an embodiment not presently claimed.

Figure 6 is a schematic representation of the analytical instrument according to the present invention.

Figure 7 represents an example of the sensitivity of the method characterised by the useful yield in respect to the number of sputtered atoms, for a number of metal elements.

Figure 8 represents a static SIMS spectrum of the collector after a PVC deposit recorded with positive secondary ions.
Figure 9 represents a static SIMS spectrum of the collector after a PS deposit recorded with positive secondary ions.

## Detailed description of the invention

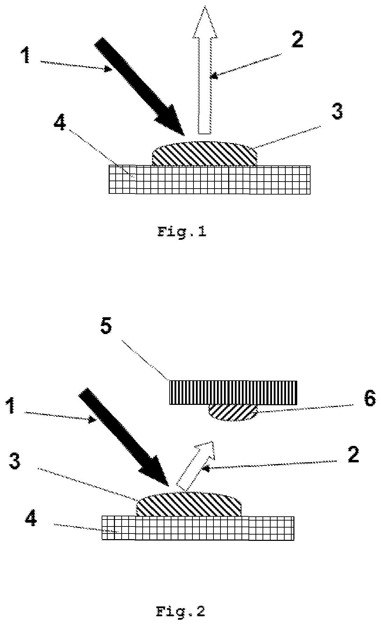

As represented in figure 1, in Secondary Ion Mass Spectrometry (SIMS) analysis, following the primary ion bombardment 1, the secondary particles 2 (atoms, molecules, or ions) emitted (or sputtered) from the sample 3 to be analysed, which is placed on a sample holder 4, are directly analysed by mass spectrometry.

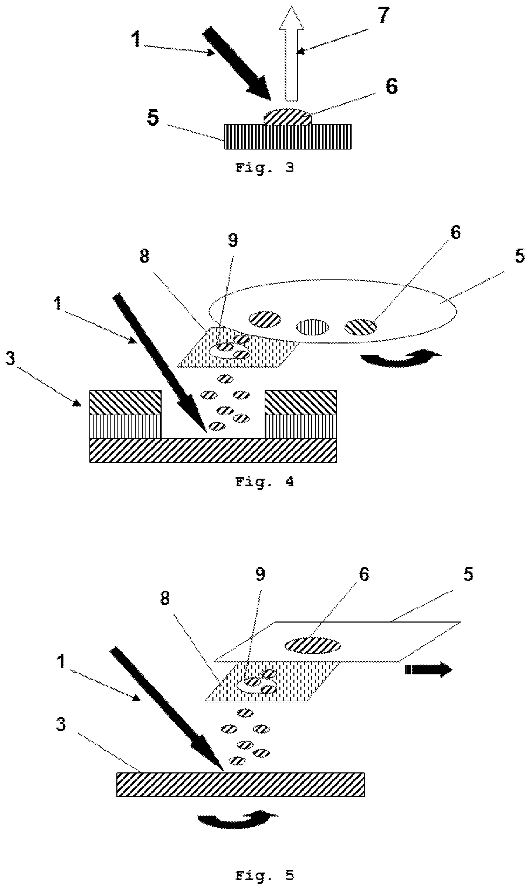

The originality of the present invention lies in decoupling the emission of particles by the sample, from the analysis step (figures 2 and 3).

According to the present invention, the particles 2 emitted under the impact of an ion bombardment 1 are deposited on a collector 5 under ultra-high vacuum (UHV) conditions, as represented in figure 2. Then, in a second step (figure 3), the collected particles 6 (deposited matter) on the collector 5 are analysed by any suitable analytical instrument, using any suitable technique, for example static SIMS, dynamic SIMS, XPS (X-ray Photoelectron Spectroscopy), AES (Auger Electron Spectroscopy), UPS (Ultraviolet Photoelectron Spectroscopy), electron microprobe, Total X-Ray Fluorescence.

Preferably, the analysis is performed in a dedicated instrument which may or may not be located in the same laboratory, and which may, or may not, be a part of a more complex instrument comprising a plurality of instruments performing the steps of the method according to the present invention.

Two important points in this technique are the cleanliness and the preparation of the collector 5 surface (for example optimisation by deposition of metal films by evaporation, by oxidation, etc.).

The preparation of the collector 5 combined to a very diluted deposition of matter 6 corresponds to the creation of a new well-defined matrix which is chosen with respect to the subsequent analysis parameters (elements to be analysed, analysis mode, etc.).

On the one hand, depositing the matter sputtered 2 from different samples or from different layers of a sample 3 on a same collector 5 makes this method a powerful tool to circumvent the previously mentioned matrix effect in SIMS. As a matter of fact, the subsequent analyses are performed in a same and well-defined matrix instead of different matrixes of changing and unknown composition

On the other hand, the optimization of the collector 5 surface allows an enhancement of the yields of the subsequent analysis. In the particular case of using SIMS for this subsequent analysis of the collector 5, enhanced secondary ion emission can be obtained in the different SIMS analysis modes by well-choosing the collector 5 surface and thus the matrix with respect to the elements to be analysed and the analysis mode (positive secondary ions, negative secondary ions, organic information). The main concept of the collector treatment is to change the chemical state of the collector 5 surface, which modifies the matrix on which the deposition is done and influences significantly the secondary ion emission.

The main advantage of the invention is to permit to achieve quantification while maintaining high analysis sensitivities, for both organic and inorganic samples, and/or to increase the sensitivity of the analysis, for both organic and inorganic samples. Furthermore, as the primary bombardment 1 is decoupled from the analysis, the primary ion bombardment conditions (impact energy, incidence angle, etc.) can be freely chosen and can thus be optimized, for example for an optimum depth resolution.

The useful yield (UY) of the method according to the invention is defined by the ratio between the total counts of a given element "M" detected during the analysis of the collector 5 and the number of atoms "M" initially sputtered from the sample 3. UY depends on both steps of the method, i.e. the sputter-deposition process and the analysis, and can be written as follows:

$$\mathrm{UY} = \gamma \cdot \mathrm{UY}_{\mathrm{Analysis}} \quad \text{(Equ. 1)}$$

The factor $\gamma$ is depending on the sputter-deposition process and is composed of the ratio of sputtered particles reaching the collector 5 with respect to the total number of sputtered particles and of the sticking efficiency on the collector 5. $\mathrm{UY}_{\mathrm{Analysis}}$ is the useful yield of the analysis of the collector 5. High values of $\mathrm{UY}_{\mathrm{Analysis}}$ are achieved, as already mentioned, by optimising the surface of the collector 5 and thus increasing the yield of the subsequent analysis. In the particular case of a SIMS analysis of the collector 5, the collector surface will be chosen with respect to the nature of the elements to be analysed and the analysis mode (positive secondary ions, negative secondary ions, organic information) in order to increase the ionisation efficiency.

As a consequence, the initial loss of sensitivity due to an incomplete collection of sputtered matter 2 ($\gamma < 1$) and the fact that only a fraction of the deposited matter 6 is used can be compensated.

As mentioned, the ion bombardment 1, used for the sputtering of the sample 3, can be freely chosen. It may be a monoatomic ions or cluster ions bombardment. This bombardment 1 can advantageously be performed using an ion beam having an extremely low energy, thus improving the depth resolution.

In a preferred embodiment, the collector 5 is mobile, for example as shown in figure 4. The movement of the collector 5 is a rotation. Furthermore, this movement may be continuous or sequential during the collection of the secondary particles 2. This movement allows to properly position the collector 5 with respect to the preferred direction of particles 2 sputtered from the sample 3. Furthermore, this movement allows to keep sub-monolayer deposition levels as the flux of the collected particles 6 constantly deposits on virgin collector areas. Moreover, it allows to record depth profiles of the sample 3 by depositing the matter sputtered 2 from different depths of the sample 3 at different and separate locations and thus by transforming in-depth information into lateral information.

In another, presently not claimed, embodiment (figure 5), the sample 3 and/or the collector 5 may be mobile, and are moving during the analysis, in any direction, preferably laterally or in rotation, independently one from the other.

In another particular embodiments, the collector 5 may comprise the particles from different layers of a same sample, or particles from different samples, or particles from different layers of different samples.

The collector 5 used to collect sputtered matter 2 from the sample 3 to be analyzed, may have any suitable shape. Preferably, it has the shape of a plate. It is preferably a one inch wafer made of silicon or germanium, more preferably of high purity.

Preferably, the collector 5 is mounted on a collector holder under clean conditions, said holder being designed to fit on all instruments used throughout the process according to the invention.

The collector 5 is positioned with a high precision motorised stage (x, y, z, rotation) at a distance of around 2 mm in front of the sample surface. A diaphragm plate 8 comprising a circular aperture 9, mounted for example 100 $\mu$m in front of the collector surface, limits the exposed surface of the collector 5, for example to a diameter of around 500 $\mu$m.

To take into account the nature of the particles 2 to be collected, the collector 5 may be treated to change the chemical state of the collector 5 surface, which thus modifies the matrix on which the deposition of the particles 2 to be collected is performed. The collector 5 surface may be oxidized, or may be coated with one or more elements, said elements may be then oxidized or not. Thus, the collector 5 surface may have a high work function for the enhancement of positive secondary ion emission, or a low work function for the enhancement of negative secondary ion emission, or the surface may be coated with gold or silver to produce a cationisation for organic information.

Elements which can be chosen for the collector 5 in general, or for the collector 5 surface in particular, owing to their high work function are, for example: platinum (Pt), tungsten (W), nickel (Ni), gold (Au). Other elements which can be chosen for the collector general or for the collector surface in particular owing to their low work function are, for example: tantalum (Ta), silver (Ag), aluminum (Al).

The oxidation, the coating, or the oxidation of the coated collector surface, may be performed by any suitable method. Preferably, it is done by Molecular Beam Epitaxy (MBE) or Rapid Thermal Processing (RTP).

Preferably, before the oxidation or the coating of its surface, the collector 5 is cleaned. To avoid pollutants or impurities that could give mass interferences with the secondary particles deposit, the collectors 5 are prepared and cleaned prior to their use. The first cleaning and preparation of the collectors occurs in a clean room. In this way pollution (contaminants, dust) are minimised. Preferably, a cleaning protocol, close to those used in microelectronics, is used. For example, in a clean room (ISO Class 4) and under a laminar flow hood, the wafer is cleaned with acetone, ethanol and rinsed with demineralised water. The wafer is then dried by an $N_2$-air gun or in a clean room oven, which is equipped by an HEPA filter.

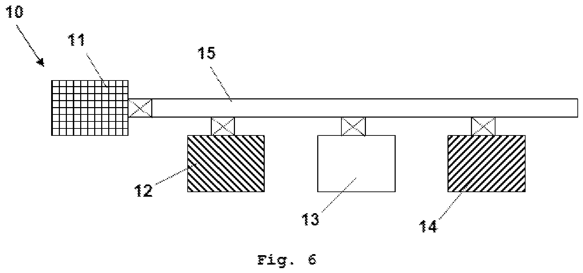

As schematically shown on figure 6, the analytical instrument 10 according to the invention comprises three main sections. In the first section the cleaning and the preparation of the collector 5 take place, in the second section the sputter-deposition of the sample material on the collector 5 is performed, and the third section corresponds to the transfer of the collector 5 inside the instrument itself and to the subsequent analytical instruments. This arrangement allows to perform all the steps of the method according to the invention in dedicated separate chambers under optimized conditions.

All the sections of the analytical instrument 10 are under Ultra High Vacuum (UHV). In order to obtain sensitive reproducible results, the materials should be free of contamination, hence the use of UHV. The UHV may be created by any suitable means, for example by turbomolecular pumps and ion getter pumps.

The analysis of the material collected 6 on the collector 5 surface is either done in the instrument 10 according to the invention itself or in an independent analytical instrument. In the latter case, the collector 5 will be transferred under vacuum conditions between the instrument 10 and independent analytical instrument. Thus, the analytical instrument 10 may further comprise any suitable docking station 11, or chamber, fitting any collector transfer vessel or transfer system, allowing to transfer the collector 5 between the instrument 10 and the transfer vessel. Preferably, the docking station is designed to fit a UHV transfer system comprising the collector 5, or the sample holder 4 comprising the sample 3 to analyse, or both.

The analysis instrument 10 comprises collector handling means to transfer the collector 5 from one section of the analytical instrument to another section, for example from the cleaning and treating chamber to the sputter-deposition chamber. The handling means may comprise transfer rods and carriers moving on rails inside the vacuum tubes.

The collector 5 is cleaned from any contaminations in a dedicated UHV chamber 12, equipped with a sputter gun allowing an ion etching of the collector 5 surface. The sputter gun may be operated with $Ar^+$, $Xe^+$.

The collector 5 is then transferred into a coating chamber 13 where it is prepared and its surface is oxidised or coated. Preferably, the coating chamber 13 is equipped with effusion cells, an electron beam evaporator, quartz microbalances, a Reflection High Energy Electron Diffraction (RHEED) and/or a Residual Gas Analyser (RGA). Preferably, the working pressure in the chamber is $10^{-10}$ mbar.

The cleaned and treated collector 5 is then transferred under UHV to the sputter-deposition chamber 14, in which the sputtering of the sample 3 and further the deposition of the sputtered particles 2 on the collector 5 are performed. The transfer is made using sample handling means and a transfer tube 15.

The sputter-deposition chamber 14 is preferably equipped with an ion gun, preferably being of the Floating Low-Energy Ion Gun (FLIG) type, a secondary electron detector allowing a visualization of the sputtering ion beam and two motorized high precision stages for the sample and the collector respectively.

The analytical instrument 10 comprises means to move or rotate the collector 5 or the sample 3, or both, in any direction during the analysis process. These means may comprise motorized high precision sample holder 4 and collector stages.

The process and the instrument according to the present invention may be used for the analysis of any organic and inorganic material, for example material used or produced in the semiconductor industry, but also in all industries using coatings or surface.

**Examples**

**Example 1:** Inorganic samples

The sputtering of a Ge sample by $O_2^+$ ions was used as a model system to study the impact of using different collector 5 surfaces (W, Ta, Al) on the useful yield of the method according to the invention.

In order to study the influence of the collector 5 surface on the useful yield, two elements with low work function, tantalum (Ta) and aluminium (Al), and one element with high work function, tungsten (W) were chosen.

Thin films of the mentioned elements were deposited on a one inch Si wafers by electron beam physical vapour deposition (EB-PVD) from different metal pellets (Lesker, 99.999%) in a ultra-high vacuum chamber (base pressure $<10^{-8}$ mbar). The distance between the source and the substrate was about 60 cm in order to achieve uniform thickness of the deposits. No extra heating was applied. The deposition rate and the film thicknesses were controlled by a quartz microbalance. The deposition rate was set to 1.0 Å/s (i.e. around $5 \cdot 10^{15}$ atoms/s/$cm^2$). The resulting film thickness was around 100 nm.

A collector 5 under the form of a Si wafer comprising a thin film, obtained as described above, was introduced into the sputter-deposition chamber 14 equipped with the FLIG. The sample 3 under analysis was a Ge wafer. It was sputtered by an $O_2^+$ ion beam at 10 keV, with a beam current of 50 nA and with a spot diameter of 60 $\mu$m under ultra-high vacuum (base pressure $<10^{-8}$ mbar). The raster size was 150x150 $\mu m^2$. The sputtered matter 2 was deposited on the collector 5, which was rotating continuously during the deposition process in order to obtain a sub-monolayer deposition level as the flux of sputtered matter 2 constantly deposits on virgin collector areas. The sample 3 and the limiting aperture 9 were immobile during the sputter-deposition.

The amount of sputtered Ge atoms has been calculated from profilometry measurements of the crater generated during the sputtering of the Ge sample. Considering the bombardment time and the speed of rotation of the collector 5, one can deduce that the number of sputtered Ge atoms per deposit ranges between $4.0 \cdot 10^{13}$ and $4.5 \cdot 10^{13}$ atoms for the different experiments.

The collector 5 with the sputtered Ge was introduced into the portable UHV suitcase (base pressure $< 10^{-8}$ mbar) and transferred to the SIMS instrument. The SIMS measurements were performed in a Cameca SC-Ultra instrument. A $Cs^+$ primary ion beam with an impact energy of 560 eV and an incidence angle of 48° was used. The primary current was 20 nA and the raster size 500x500 $\mu m^2$. The analysis was performed in negative secondary ion mode (detection of $Ge^-$).

For each collector 5, SIMS depth profiles have been performed on the Ge deposit 6. The amount of detected Ge has been calculated for each collector 5 by integration of the Ge signal after background subtraction. The useful yield UY of the method according to the invention for Ge can be calculated for each collector 5 by dividing the obtained total $Ge^-$ counts by the number of Ge atoms initially sputtered from the Ge sample.

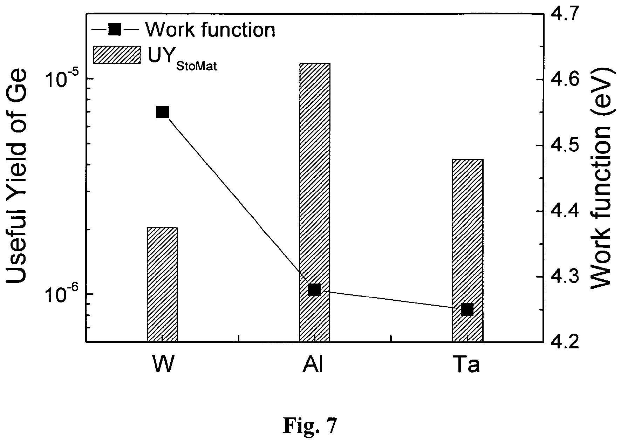

Figure 7 shows the obtained values of UY for Ge (in the negative secondary ion mode) as a function of the material of the metallic collectors. The highest useful yield with $1.2x10^{-5}$ is found for the Al collector. For Ta, a value of $4.2x10^{-6}$ is obtained. For W finally, UY decreases to $2.0x10^{-6}$.

According to equation 1, the useful yield of the method according to the invention is composed of the collection

efficiency $\gamma$ and the useful yield of the SIMS analysis of the collector, $UY_{SIMS}$. The SIMS useful yield for monoatomic ions is only depending on an instrumental factor and on the ionisation probability of the considered secondary ion. Possible fluctuations of the instrumental factor have been eliminated in the present case by normalising the detected signals with respect to the bulk $Si^-$ signal. The behaviour of the ionisation probability can be modelled in the present case (metallic collectors) by the electron-tunnelling model. This model basically considers that there is a dependency between the secondary ionisation probability ($\beta$) and the work function of the matrix ($\phi$). For negative ionisation, the model predicts:

$$\beta^- \approx 1 \text{ if } \phi < A, \quad (\text{Equ. 2a})$$

$$\beta^- \propto e^{-(\phi-A)} \text{ if } \phi > A, \quad (\text{Equ. 2b})$$

where A is the electron affinity of the element to be ionised.

According to this model, the negative ionisation probability and thus the useful yield is increasing when the work function of the matrix $\phi$ is lowered.

The useful yield values obtained are in agreement with this model: the lowest useful yield is found for the collector with the highest work function (tungsten, $\Phi_W = 4.55$ eV), while two and six times higher values are obtained for lower work function collectors (tantalum, $\Phi_{Ta} = 4.25$ eV, and aluminium $\Phi_{Al} = 4.28$ eV, respectively).

It is known so far from experimental results and simulations that, depending on the angular distribution of the emitted particles, 10 to 40 % of the sputtered particles are hitting the collector 5 on the 500 $\mu$m field which is analysed in the subsequent SIMS analysis.

A traditional direct SIMS analysis of a Ge $\Phi_{Ge} = 5.0$ eV) with a $Cs^+$ primary ion bombardment and a detection of $Ge^-$ secondary ions leads to a SIMS useful yield of $8.6 \cdot 10^{-6}$. This value is in the range of the useful yields obtained by the technique according to this invention. One can thus conclude that, in the method according to the invention, the loss of matter during the sputter deposition process ($\gamma < 1$) can be compensated, or even overcome, by high useful yields in the subsequent analysis of the collector thanks to optimised work function conditions of the collector coating.

**Example 2:** Inorganic sample

Aluminum, titanium, indium and nickel samples have been analysed in the same way than described in example 1. The samples 3 have been submitted to a $Xe^+$ sputtering ion bombardment 1. The emitted matter 2 has been collected on Si collectors 5.

The collectors 5 have been subsequently transferred under UHV conditions to a Cameca SC Ultra instrument and analysed by dynamic SIMS in the positive secondary ion mode.

The following useful yields UY of the method according to the invention have been determined:

UY (Al) = $1.8 \cdot 10^{-4}$
UY (Ti) = $6.3 \cdot 10^{-6}$
UY (In) = $3.5 \cdot 10^{-5}$
UY (Ni) = $6.4 \cdot 10^{-6}$

**Example 3:** Organic sample

A silicon substrate coated with polyvinylchloride (PVC) is analysed.

The substrate is coated with polyvinylchloride by spin-coating performed with a KW-4A instrument from CHEMAT, allowing a two-step rotation with adjustable speed and time. A 2% wt PVC solution in THF is dropped on the substrates after heating in ultrasonic bath for dissolution. Then, the sample rotation is started at a speed of 700 rpm to spread it off and eliminate excess. Afterwards, the speed is raised to 2500 rpm to dry and homogenize the coating. Finally, the sample is annealed on a hotplate at 50°C for about 30 minutes.

The collector 5, a one inch Silicon wafer, is cleaned in a ultrasonic bath with isopropanol and acetone, then is dried under a nitrogen flow and finally annealed on a hotplate to desorb remaining solvents.

The cleaned collector 5 is then coated with a gold layer for enhancing secondary ion emission. The gold coating is performed in a Molecular Beam Epitaxy (MBE) chamber 13 to obtain a coating of 1.8nm.

The collector 5, under the form of a Si wafer comprising a thin film as described, was introduced into a sputter-deposition chamber 14 equipped with the FLIG. The PVC sample under analysis was sputtered by an $Ar^+$ ion beam at 12,5 keV, with a beam current of 200 pA under ultra-high vacuum (base pressure $<10^{-8}$ mbar). The raster size was

500x500 $\mu$m$^2$. The total primary ion dose was $5 \cdot 10^{12}$ ions/cm$^2$, which allowed to stay in the static conditions (ion dose < $10^{13}$ ions/cm$^2$).

In this analysis the collector 5 stays fix while the organic sample 3 is moved laterally, and back and forth, under the incident ion beam to multiply the sputtered zones on the samples. The collector 5 can then receive a larger dose (and thus a larger amount of sputtered matter). A matrix of 7x7 zones is sputtered into the sample of interest.

The organic deposited matter 6 on the collector plate 5 is then analysed by static SIMS (TOF-SIMS) on a IONTOF ToF-SIMS III instrument. The primary ion beam of Ar$^+$ has an energy of 10 keV and a primary current of 1 pA. The pulse width is 500 ns, the repetition rate is 150 $\mu$s and the raster size is of 80 x 80 $\mu$m$^2$. The analysis is performed during 180 s in a negative and positive secondary ion mode.

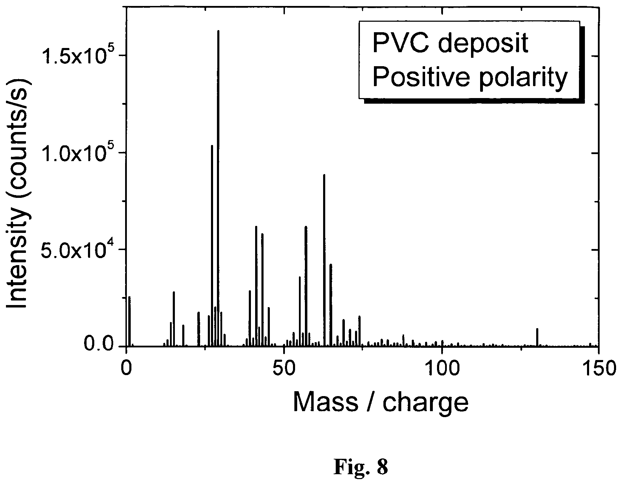

Figure 8 shows the mass spectrum obtained in the positive secondary ion mode on the collected material 6 deposited on the collector plate 5. The characteristic peaks of PVC are enhanced due to the presence of the gold coating on the collector surface 5.

**Example 4:** Organic sample

A silicon substrate coated with polystyrene (PS) is prepared and analysed as described in example 3. The analysis of the deposited matter 6 on the collector 5 is performed in the conditions described in example 2.

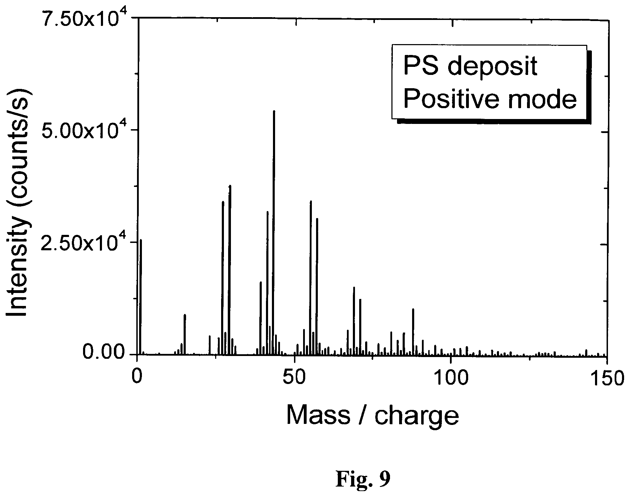

Figure 9 shows the mass spectrum obtained in the positive secondary ion mode on the collected material 6 deposited on the collector plate 5. The characteristic peaks of PS are enhanced due to the presence of the gold coating on the collector surface 5.

**Claims**

1. A method for analysing an inorganic or organic sample under ultra-high vacuum, comprising the steps of:

   a) providing under ultra-high vacuum at least one sample (3) to be analysed,
   b) providing under ultra-high vacuum at least one collector (5),
   c) submitting said sample (3) to an ion bombardment (1),
   d) collecting on said collector (5) particles (2) emitted by said bombarded sample (3),
   e) analysing the collected particles (6) on said at least one collector (5),

   said steps being performed so that the emission of sample particles (2) is decoupled of the analysis step, and wherein the collector (5) is a rotary collector, **characterized in that** the collector is rotating independently from the sample (3) during step d).

2. The method according to claim 1, further comprising, before step c), a cleaning step of the collector (5) performed by an etching ion gun.

3. The method according to any of claims 1 and 2, further comprising, before step c), a step of treating the collector (5), said treating step comprising either the oxidation or the coating of the surface of the collector (5) .

4. The method according to claim 3, wherein the surface of the collector (5) is either oxydized, or coated with a layer made of one or more elements, said elements being selected from the group consisting of aluminum (Al), gold (Au), nickel (Ni), platinum (Pt), silver (Ag), tantalum (Ta), and tungsten (W).

5. The method according to any of claims 3 and 4, wherein the treating step of the collector (5) is performed by Molecular Beam Epitaxy (MBE) or Rapid Thermal Processing (RTP) .

6. The method according to any of the preceding claims, wherein a first analytical instrument used to perform step c) and d), and a second analytical instrument used to perform step e), are located in remote places.

7. The method according to any of the preceding claims, wherein step e) is performed by an analytical method selected from the group consisting of static SIMS (Secondary Ion Mass Spectrometry), dynamic SIMS, XPS (X-ray Photoelectron Spectroscopy), AES (Auger Electron Spectroscopy), UPS (Ultraviolet Photoelectron Spectroscopy), electron microprobe, and Total X-Ray Fluorescence.

8. An analytical instrument (10) for operating under ultra-high vacuum, comprising a source for ion bombardment, a sample holder operating under ultra-high vacuum for holding a sample, at least one collector (5) operating under ultra-high vacuum for collecting the secondary particles (2) emitted during an ion bombardment (1) of a sample (3) to be analysed and an analyser for analysing the collected secondary particles, **characterized in that** it comprises means to rotate said collector (5) independently from the sample, during collection of said secondary particles, said means comprising a motorized high-precision collector stage for rotating the collector.

9. The instrument (10) according to claim 8, wherein a diaphragm (8) with a circular aperture (9) is disposed in front of the collector (5), preferably at a distance of about 2 mm from the collector (5), so as to limit the exposed surface of the collector (5) to the particles emitted from the sample, preferably to a diameter of 500 $\mu$m.

10. The instrument 10 according to any of the claims 8 to 9, wherein the collector (5) comprises a one inch Si or Ge wafer.

11. The instrument (10) according to any of the claims 8 to 10, wherein it is provided with means for either oxydizing, or coating with a layer made of one or more elements, the surface of the collector (5), or both, said elements being selected from the group consisting of aluminum (Al), gold (Au), nickel (Ni), platinum (Pt), silver (Ag), tantalum (Ta), and tungsten (W).

12. The instrument (10) according to any of the claims 8 to 11, further comprising analytical means selected in the group consisting of static SIMS (Secondary Ion Mass Spectrometry), dynamic SIMS, XPS (X-ray Photoelectron Spectroscopy), AES (Auger Electron Spectroscopy), UPS (Ultraviolet Photoelectron Spectroscopy), electron microprobe, and Total X-Ray Fluorescence.

13. The instrument (10) according to any of claims 8 to 12, further comprising the following main sections, all under ultra-high vacuum:

> - optionally, a docking station or chamber (11), able to fit a transfer vessel for transferring the collector (5), possibly mounted on a holder, between the instrument (10) and said transfer vessel;
> - a cleaning section (12) for cleaning the collector (5), preferably equipped with a sputter gun allowing ion etching;
> - a coating and preparation section (13), for preparing and surface oxydising and coating the collector (5), preferably equipped with effusion cells, an electron beam evaporator, quartz microbalances, a Reflection High Energy Electron Diffraction (RHEED) and/or a Residual Gas Analyser (RGA);
> - a sputter-deposition section (14) for sputtering the sample (3) and further depositing the sputtered particles (2) onto the collector (5), equipped with an ion gun, preferably being of the Floating Low-Energy Ion Gun (FLIG) type, a secondary electron detector allowing a visualization of the sputtering ion beam and two motorized high precision stages for the sample and the collector respectively;

the instrument (10) further comprising handling means and a transfer tube (5) connected under ultra-high vacuum to all said sections for making the transfer of the collector (5) between the different sections.

**Patentansprüche**

1. Verfahren zum Analysieren einer anorganischen oder organischen Probe unter Ultrahochvakuum, das die folgenden Schritte umfasst:

> a) Bereitstellen wenigstens einer zu analysierenden Probe (3) unter Ultrahochvakuum,
> b) Bereitstellen wenigstens eines Kollektors (5) unter Ultrahochvakuum,
> c) Aussetzen der Probe (3) gegenüber einer Ionenbombardierung (1),
> d) Sammeln von Teilchen (2), die durch die bombardierte Probe (3) emittiert werden, auf dem Kollektor (5),
> e) Analysieren der gesammelten Teilchen (6) auf dem wenigstens einen Kollektor (5),

wobei die Schritte so durchgeführt werden, dass die Emission von Probenteilchen (2) von dem Analyseschritt entkoppelt wird, und
wobei der Kollektor (5) ein Rotationskollektor ist, **dadurch gekennzeichnet, dass** der Kollektor unabhängig von der Probe (3) während des Schrittes d) rotiert.

2. Verfahren nach Anspruch 1, das ferner vor dem Schritt c) einen Reinigungsschritt des Kollektors (5) umfasst, der durch eine Ätzionenkanone durchgeführt wird.

**3.** Verfahren nach einem der Ansprüche 1 und 2, das ferner vor dem Schritt c) einen Schritt des Behandelns des Kollektors (5) umfasst, wobei der Behandlungsschritt entweder die Oxidation oder die Beschichtung der Oberfläche des Kollektors (5) umfasst.

**4.** Verfahren nach Anspruch 3, wobei die Oberfläche des Kollektors (5) entweder oxidiert oder mit einer Schicht beschichtet ist, die aus einem oder mehreren Elementen gefertigt ist, wobei die Elemente aus der Gruppe ausgewählt werden, die aus Aluminium (Al), Gold (Au), Nickel (Ni), Platin (Pt), Silber (Ag), Tantal (Ta) und Wolfram (W) besteht.

**5.** Verfahren nach einem der Ansprüche 3 und 4, wobei der Behandlungsschritt des Kollektors (5) durch Molekularstrahlepitaxie (MBE: Molecular Beam Epitaxy) oder eine rasche thermische Verarbeitung (RTP: Rapid Thermal Processing) durchgeführt wird.

**6.** Verfahren nach einem der vorhergehenden Ansprüche, wobei sich ein erstes analytisches Instrument, das zum Durchführen der Schritte c) und d) verwendet wird, und ein zweites analytisches Instrument, das zum Durchführen des Schrittes e) verwendet wird, an fernen Plätzen befinden.

**7.** Verfahren nach einem der vorhergehenden Ansprüche, wobei der Schritt e) durch ein analytisches Verfahren durchgeführt wird, das aus der Gruppe ausgewählt wird, die aus statischer SIMS (Secondary Ion Mass Spectrometry - Sekundärionenmassenspektrometrie), dynamischer SIMS, XPS (X-Ray Photoelectron Spectroscopy - Röntgen-Photoelektronen-Spektroskopie), AES (Auger Electron Spectroscopy - Auger-Elektronen-Spektroskopie), UPS (Ultraviolet Photoelectron Spectroscopy - Ultraviolett-Photoelektronen-Spektroskopie), Elektronenstrahlmikroanalyse und Total-Röntgenfluoreszenz besteht.

**8.** Analytisches Instrument (10) zum Betrieb unter Ultrahochvakuum, das eine Quelle für eine Ionenbombardierung, einen Probenhalter, der unter Ultrahochvakuum arbeitet, zum Halten einer Probe, wenigstens einen Kollektor (5), der unter Ultrahochvakuum arbeitet, zum Sammeln der Sekundärteilchen (2), die während einer Ionenbombardierung (1) einer zu analysierenden Probe (3) emittiert werden, und einen Analysator zum Analysieren der gesammelten Sekundärteilchen umfasst, **dadurch gekennzeichnet, dass** es ein Mittel zum Rotieren des Kollektors (5) unabhängig von der Probe während der Sammlung der Sekundärteilchen umfasst, wobei das Mittel eine motorisierte Hochpräzisionskollektorstufe zum Rotieren des Kollektors umfasst.

**9.** Instrument (10) nach Anspruch 8, wobei ein Diaphragma (8) mit einer kreisförmigen Öffnung (9) vor dem Kollektor (5) angeordnet ist, bevorzugt in einem Abstand von etwa 2 mm von dem Kollektor (5) entfernt, so dass die Oberfläche des Kollektors (5), die den von der Probe emittierten Teilchen ausgesetzt wird, begrenzt wird, bevorzugt auf einen Durchmesser von 500 $\mu$m.

**10.** Instrument 10 nach einem der Ansprüche 8 bis 9, wobei der Kollektor (5) einen 1-Zoll-Si- oder -Ge-Wafer umfasst.

**11.** Instrument (10) nach einem der Ansprüche 8 bis 10, wobei es mit einem Mittel zum entweder Oxidieren oder Beschichten mit einer Schicht, die aus einem oder mehreren Elementen besteht, der Oberfläche des Kollektors (5) oder mit beidem versehen ist, wobei die Elemente aus der Gruppe ausgewählt werden, die aus Aluminium (Al), Gold (Au), Nickel (Ni), Platin (Pt), Silber (Ag), Tantal (Ta) und Wolfram (W) besteht.

**12.** Instrument (10) nach einem der Ansprüche 8 bis 11, das ferner ein analytisches Mittel umfasst, das aus der Gruppe ausgewählt wird, die aus statischer SIMS (Secondary Ion Mass Spectrometry - Sekundärionenmassenspektrometrie), dynamischer SIMS, XPS (X-Ray Photoelectron Spectroscopy - Röntgen-Photoelektronen-Spektroskopie), AES (Auger Electron Spectroscopy - Auger-Elektronen-Spektroskopie), UPS (Ultraviolet Photoelectron Spectroscopy - Ultraviolett-Photoelektronen-Spektroskopie), Elektronenstrahlmikroanalyse und Total-Röntgenfluoreszenz besteht.

**13.** Instrument (10) nach einem der Ansprüche 8 bis 12, das ferner die folgenden Hauptabschnitte umfasst, die sich alle unter Ultrahochvakuum befinden:

- optional eine Andockstation oder -kammer (11), die dazu in der Lage ist, zu einem Transfergefäß zum Transferieren des Kollektors (5), möglicherweise auf einen Halter montiert, zwischen dem Instrument (10) und dem Transfergefäß zu passen;
- einen Reinigungsabschnitt (12) zum Reinigen des Kollektors (5), bevorzugt ausgerüstet mit einer Sputterkanone, welche Ionenätzen ermöglicht;
- einen Beschichtung-und-Vorbereitung-Abschnitt (13) zur Vorbereitung und Oberflächenoxidation und Beschichtung des Kollektors (5), bevorzugt ausgerüstet mit Effusionszellen, einem Elektronenstrahlverdampfer, Quarzmikrowaagen, einer Reflexion-Hochenergie-Elektronen-Beugung (RHEED: Reflection High Energy Electron Diffraction) und/oder einem Restgasanalysator (RGA: Residual Gas Analyser);

- einen Sputterabscheidungsabschnitt (14) zum Sputtern der Probe (3) und ferner Abscheiden der gesputterten Teilchen (2) auf den Kollektor (5), ausgerüstet mit einer Ionenkanone, die bevorzugt von dem Floating-Low-Energy-Ion-Gun(FLIG)-Typ ist, einem Sekundärelektronendetektor, der eine Visualisierung des Sputterionenstrahls ermöglicht, und zwei motorisierten Hochpräzisionsstufen für die Probe bzw. den Kollektor; wobei das Instrument (10) ferner ein Handhabungsmittel und ein Transferrohr (5) umfasst, das unter Ultrahochvakuum mit den sämtlichen Abschnitten zum Durchführen des Transfers des Kollektors (5) zwischen den unterschiedlichen Abschnitten verbunden ist.

**Revendications**

1. Procédé permettant d'analyser un échantillon inorganique ou organique sous un vide ultra poussé, comportant les étapes consistant à :

a) fournir sous un vide ultra poussé au moins un échantillon (3) à analyser,
b) fournir sous un vide ultra poussé au moins un collecteur (5),
c) soumettre ledit échantillon (3) à un bombardement ionique (1),
d) collecter sur ledit collecteur (5) des particules (2) émises par ledit échantillon bombardé (3),
e) analyser les particules collectées (6) sur ledit au moins un collecteur (5),

lesdites étapes étant effectuées de sorte que l'émission de particules (2) d'échantillon soit découplée de l'étape d'analyse, et
dans lequel le collecteur (5) est un collecteur rotatif, **caractérisé en ce que** le collecteur tourne indépendamment de l'échantillon (3) pendant l'étape d).

2. Procédé selon la revendication 1, comportant en outre, avant l'étape c), une étape de nettoyage du collecteur (5) effectuée par un canon à ions de gravure.

3. Procédé selon l'une quelconque des revendications 1 et 2, comportant en outre, avant l'étape c), une étape de traitement du collecteur (5), ladite étape de traitement comprenant soit l'oxydation, soit le revêtement de la surface du collecteur (5).

4. Procédé selon la revendication 3, dans lequel la surface du collecteur (5) est soit oxydée, soit revêtue d'une couche faite d'un ou de plusieurs éléments, lesdits éléments étant choisis dans le groupe constitué par l'aluminium (Al), l'or (Au), le nickel (Ni), le platine (Pt), l'argent (Ag), le tantale (Ta) et le tungstène (W).

5. Procédé selon l'une quelconque des revendications 3 et 4, dans lequel l'étape de traitement du collecteur (5) est réalisée par épitaxie par jets moléculaires (MBE) ou traitement thermique rapide (RTP).

6. Procédé selon l'une quelconque des revendications précédentes, dans lequel un premier instrument analytique utilisé pour réaliser les étapes c) et d), et un second instrument analytique utilisé pour réaliser l'étape e), sont situés dans des endroits distants.

7. Procédé selon l'une quelconque des revendications précédentes, dans lequel l'étape e) est réalisée par un procédé analytique sélectionné dans le groupe constitué par la SIMS (spectrométrie de masse à ionisation secondaire) statique, la SIMS dynamique, la XPS (spectrométrie de photoélectrons induits par rayons X), l'AES (spectroscopie des électrons Auger), l'UPS (spectrométrie photoélectronique UV), la microsonde électronique et la spectrométrie de fluorescence X en réflexion totale.

8. Instrument analytique (10) permettant de fonctionner sous un vide ultra poussé, comprenant une source pour un bombardement ionique, un porte-échantillon fonctionnant sous un vide ultra poussé pour tenir un échantillon, au moins un collecteur (5) fonctionnant sous un vide ultra poussé pour collecter les particules secondaires (2) émises pendant un bombardement ionique (1) d'un échantillon (3) à analyser et un analyseur permettant d'analyser les particules secondaires collectées, **caractérisé en ce qu'**il comprend des moyens pour faire tourner ledit collecteur (5) indépendamment de l'échantillon, pendant la collecte desdites particules secondaires, lesdits moyens comprenant un étage motorisé haute précision de collecteur permettant de faire tourner le collecteur.

9. Instrument (10) selon la revendication 8, dans lequel une membrane (8) dotée d'une ouverture circulaire (9) est disposée devant le collecteur (5), de préférence à une distance d'environ 2 mm du collecteur (5), de façon à limiter la surface exposée du collecteur (5) aux particules émises par l'échantillon, de préférence à un diamètre de 500 $\mu$m.

10. Instrument (10) selon l'une quelconque des revendications 8 à 9, dans lequel le collecteur (5) comprend une plaquette en Si ou Ge d'un pouce.

11. Instrument (10) selon l'une quelconque des revendications 8 à 10, étant doté de moyens pour soit oxyder, soit revêtir d'une couche composée d'un ou de plusieurs éléments, la surface du collecteur (5), soit les deux, lesdits éléments étant choisis dans le groupe constitué par l'aluminium (Al), l'or (Au), le nickel (Ni), le platine (Pt), l'argent (Ag), le tantale (Ta) et le tungstène (W).

12. Instrument (10) selon l'une quelconque des revendications 8 à 11, comprenant en outre des moyens analytiques sélectionnés dans le groupe constitué par la SIMS (spectrométrie de masse à ionisation secondaire) statique, la SIMS dynamique, la XPS (spectrométrie de photoélectrons induits par rayons X), l'AES (spectroscopie des électrons Auger), l'UPS (spectrométrie photoélectronique UV), la microsonde électronique et la spectrométrie de fluorescence X en réflexion totale.

13. Instrument (10) selon une quelconque des revendications 8 à 12, comprenant en outre les sections principales suivantes, toutes sous un vide ultra poussé :

   - éventuellement, une station ou chambre d'ancrage (11), pouvant s'ajuster sur un récipient de transfert pour transférer le collecteur (5), éventuellement monté sur un support, entre l'instrument (10) et ledit récipient de transfert ;
   - une section nettoyante (12) permettant de nettoyer le collecteur (5), de préférence équipée d'un canon de pulvérisation permettant une gravure ionique ;
   - une section de revêtement et préparation (13), permettant de préparer et d'oxyder en surface et revêtir le collecteur (5), de préférence équipée de cellules d'effusion, d'un évaporateur à faisceaux d'électrons, de microbalances à quartz, d'une diffraction d'électrons de haute énergie en incidence rasante (RHEED) et/ou d'un analyseur de gaz résiduels (RGA) ;
   - une section de dépôt par pulvérisation (14) permettant de pulvériser l'échantillon (3) et en outre de déposer les particules pulvérisées (2) sur le collecteur (5), équipé d'un canon à ions, de préférence du type canon à ions basse énergie (FLIG), d'un détecteur d'électrons secondaires permettant une visualisation du faisceau ionique de pulvérisation et de deux étages motorisés haute précision pour l'échantillon et le collecteur respectivement ;

   l'instrument (10) comprenant en outre des moyens de manipulation et un tube de transfert (5) relié sous un vide ultra poussé à toutes lesdites sections pour effectuer le transfert du collecteur (5) entre les différentes sections.

Fig.1

Fig.2

Fig. 3

Fig. 4

Fig. 5

Fig. 6

**Fig. 7**

**Fig. 8**

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WITTMAACK, K.** Experimental and theoretical investigations into the origin of cross-contamination effects observed in a quadrupole-based SIMS instrument. *Applied Physics A,* vol. A38 (4), 235-252